(19) **Europäisches Patentamt / European Patent Office / Office européen des brevets**

(11) **EP 4 292 429 B1**

(12) **EUROPEAN PATENT SPECIFICATION**

(45) Date of publication and mention of the grant of the patent:
**15.10.2025 Bulletin 2025/42**

(21) Application number: **23156959.1**

(22) Date of filing: **16.02.2023**

(51) International Patent Classification (IPC):
*A01K 61/17* (2017.01)    *A01K 61/60* (2017.01)
*A01K 61/73* (2017.01)    *A01K 61/78* (2017.01)
*A01K 63/04* (2006.01)

(52) Cooperative Patent Classification (CPC):
**A01K 61/17; A01K 61/60; A01K 61/73;**
**A01K 61/78; A01K 63/042;** Y02A 40/81

(54) **HABITAT CONSTRUCTION APPARATUS AND OPERATION METHOD ORIENTED TO REPRODUCTION REQUIREMENTS OF FISHES WITH ADHESIVE AND DEMERSAL EGGS**

HABITATBAUVORRICHTUNG UND BETRIEBSVERFAHREN ZUR NACHBILDUNG VON ANFORDERUNGEN AN FISCHE MIT KLEBSTOFF UND IMMERSALEN EIERN

APPAREIL DE CONSTRUCTION D'HABITAT ET PROCÉDÉ DE FONCTIONNEMENT ORIENTÉS VERS LES EXIGENCES DE REPRODUCTION DE POISSONS AVEC ADHÉSIF ET UFS DÉMERS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **17.06.2022 CN 202210683640**

(43) Date of publication of application:
**20.12.2023 Bulletin 2023/51**

(73) Proprietor: **China Three Gorges Corporation Wuhan, Hubei 430010 (CN)**

(72) Inventors:
• **DAI, Huichao**
  **Wuhan, 430010 (CN)**
• **RONG, Guiwen**
  **Wuhan, 430010 (CN)**
• **MAO, Jingqiao**
  **Wuhan, 430010 (CN)**
• **YANG, Xuting**
  **Wuhan, 430010 (CN)**
• **CHEN, Qingqing**
  **Wuhan, 430010 (CN)**
• **JIANG, Dingguo**
  **Wuhan, 43001 (CN)**
• **ZHAO, Hanqing**
  **Wuhan, 430010 (CN)**
• **ZHAI, Ran**
  **Wuhan, 430010 (CN)**
• **ZHANG, Chengxiao**
  **Wuhan, 430010 (CN)**

(74) Representative: **Groth & Co. KB**
**P.O. Box 6107**
**102 32 Stockholm (SE)**

(56) References cited:
**CN-A- 109 090 004    CN-A- 111 567 458**
**CN-A- 112 385 585    CN-U- 210 538 200**
**US-A1- 2001 029 694**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## TECHNICAL FIELD

The present invention relates to the field of fish habitat protection, and specifically to a habitat construction apparatus oriented to reproduction requirements of fishes with adhesive and demersal eggs and an operation method.

## BACKGROUND

Topographic conditions, substrate, flow velocity, flow regime, sediment, and the like of rivers are all important factors affecting fish spawning grounds. Water conservancy and hydropower projects yield a great benefit in flood control, power generation, water supply, and shipping, but at the same time cause adverse effects to biological resources of rivers and their living environment. The structure and function of ecosystems are damaged, affecting the physiological activities and habitat space of fishes, and leading to the gradual decline of fish resources. For example, the seasonal storage of water in reservoirs reduces the amount of water in a downstream region and exposes the river floodplain, resulting in the drying up and death of the adhesive and demersal fish eggs adhered to gravels and water plants.

The Yangtze River system is the cradle of freshwater fisheries and the treasure house of fish genes in China, and is widely distributed with many fish species that lay adhesive or common demersal eggs, such as carp, crucian carp, catfish, Chinese high-fin banded shark, loach, Xenocypris davidi, yellowhead catfish, and Chinese longsnout catfish. Many of these fish species such as carp, crucian carp, catfish, Pelteobagrus vachelli, and Pseudobagrus nitidus are important economic fish species in the upper reaches of the Yangtze River, and are also important components of the water ecosystem. About 80% of the endemic fishes in the upper reaches lay adhesive and demersal fish eggs. The conservation of fish resources that lay adhesive and demersal eggs is of great importance to the conservation of biodiversity and the maintenance of ecosystem structure and function in the Yangtze River basin.

At present, there are relatively few research innovations in habitat construction and hatching for fishes producing adhesive and demersal eggs. In recent years, with the progress of the battle for the protection and restoration of the Yangtze River, some patent achievements have been formed in the fields of fish natural habitat construction and fish egg hatching. For example, disclosed in Patent Application No. 202110767295.5 is an intelligent mobile artificial fish nest experimental platform for fishes with adhesive and demersal eggs. A rotating micro-current is formed in an incubation tank through a stirring system to meet the demand of fish eggs for water flow. The water quality in a water storage tank is adjusted through a regulation system to implement the regulation of water quality in an incubation process. Disclosed in Patent Application No. 202011044351.4 is a method for constructing a spawning ground for fishes with adhesive and demersal eggs in rapids, including the steps of preliminary investigation, selection of spawning ground sites, flow adjustment, construction of artificial floodplains, construction of artificial deep pools, construction of artificial shoals, and vegetation restoration, which is important for mitigating the effects of homogenization of river habitat and destruction of fish spawning ground caused by activities such as sand mining and dredging of rivers. Disclosed in Patent Application No. 202110053687.5 is a fish school egg hatching device for fish protection, including a water tank, a water inlet pipe, a water spray pipe, a bottom frame 1, and a bottom frame 2, which facilitates fry handling and fry harvesting, keeps fry being startled and injured as much as possible in the process of fry harvesting and handling, and improves the subsequent survival rate of fry. Disclosed in the document CN 112 385 585 A is an artificial fish nest, comprising a floating device and a temporary tank set on the floating device, the floating device is provided with a substrate, the temporary tank is provided with through holes, and the temporary tank is distributed Benthic organisms, so that the biological diversity is improved.

The deficiencies of the prior art are as follows:

(1) A micro-current environment is formed through a stirring process, and the stirring may cause damage to fish eggs.
(2) Research techniques on the hatching of adhesive and demersal fish eggs have been mostly limited to the field of artificial aquaculture.
(3) It is difficult to implement the collection and incubation of fish eggs in natural rivers, the adaptability to rivers with large daily variation in water level and flow is poor, and there is no function to protect fish diversity in upstream and downstream regions of a dam.

## SUMMARY

Therefore, a technical problem to be resolved by the present invention is to overcome deficiencies in the prior art that the formation of a micro-current environment causes damage to fish eggs and fish eggs cannot be collected and hatched in natural rivers, and provides a habitat construction apparatus oriented to reproduction requirements of fishes with adhesive and demersal eggs that can adapt to variations in water level and flow in natural rivers, has advantages of adjusting a flow field and constructing an appropriate habitat environment, and integrates habitat construction and fish egg collection and hatching functions.

To resolve the foregoing problems, the present invention provides a habitat construction apparatus for fishes with adhesive and demersal eggs in a river as defined in the appended claims. The habitat construction apparatus, including:

a top cover, which can float on water surface, has a plurality of first micro nozzles uniformly distributed on the lower surface of the top cover, and an air pump is disposed on the top cover;

a base, provided with a fish egg attachment substrate thereon, where an airbag and a second micro nozzle are disposed on the base, the air pump is connected to the second micro nozzle through a first connecting pipe, and the air pump is connected to the airbag through a second connecting pipe;

an anchoring component, connected to the base;

a lifting assembly, disposed on the base and supported below the top cover, where the lifting assembly includes a plurality of lifting posts distributed at intervals in a circumferential direction of the base, the lifting post is provided with a cavity in which a fish meal feeder, a disinfectant bottle, a storage tank for talcum powder suspension and a water tank are installed, wherein the outlets of the fish meal feeder, the disinfectant bottle and the storage tank for talcum powder suspension are all equipped with one-way solenoid valves, the outlets of the disinfectant bottle and the storage tank for talcum powder suspension are both connected to the water tank, a mute pump is disposed in the water tank, the mute pump is connected to the first micro nozzles through a third connecting pipe, the lifting assembly further includes a plurality of supports for a lifting post disposed between the top cover and the base, the support for the lifting post includes a liftable and lowerable post body and a support rod distributed on the liftable and lowerable post body in a branch form, a non-woven fabric containing plant nutrient solution is provided on the support rod, the non-woven fabric is covered with aquatic plants, and the outlet of the fish meal feeder is connected to the support for the lifting post through a fourth connecting pipe;

a double-layer adjusting plate, where two double-layer adjusting plates are symmetrically disposed, a first end of the double-layer adjusting plate is connected through a hinge to a lifting post arranged on a flow-facing surface and is foldable along with lifting and lowering of the lifting post, the double-layer adjusting plate has a closed state and an open state, when the double-layer adjusting plate is in the closed state, second ends of the two double-layer adjusting plates are joined to make the double-layer adjusting plates, the base, and the top cover define a closed fish egg incubation space, the double-layer adjusting plate includes a gauze layer and a foldable layer, the gauze layer is provided with meshes with a diameter smaller than that of fish eggs, the foldable layer includes a plurality of arc-shaped movable sheets, two adjacent movable sheets are connected through a connecting member, and an angle of the movable sheet can be adjusted through the connecting member;

a propeller, connected to the base, and capable of driving the habitat construction apparatus to move;

a fish monitoring and positioning system, including a camera and a GPS locator that are disposed on the top cover and an ultrasonic probe disposed on an outer side surface of a lifting post on a non-flow-facing surface;

an intelligent control system, disposed in the cavity, and communicatively connected to a first drive mechanism driving the hinge to rotate, a second drive mechanism driving the connecting member to rotate, the camera, the GPS locator, the ultrasonic probe, and the one-way solenoid valves;

a rechargeable battery, disposed in the cavity, and electrically connected to the intelligent control system.

Optionally, the fish monitoring and positioning system further includes a fish attracting lamp disposed outside the support for the lifting post, the color of the fish attracting lamp is adjustable, and the fish attracting lamp is communicatively connected to the intelligent control system.

Optionally, the habitat construction apparatus for fishes with adhesive and demersal eggs further includes a habitat factor monitoring system, the habitat factor monitoring system includes a flow rate sensor, a water level sensor, a water temperature sensor, and an illuminance sensor that are disposed on an outer side surface of the support for the lifting post, the intelligent control system is respectively communicatively connected to the flow rate sensor, the water level sensor, the water temperature sensor, and the illuminance sensor; and

an electric heating sheet is disposed at the lifting post arranged on the non-flow-facing surface, and the intelligent control system is electrically connected to the electric heating sheet.

Optionally, a solar photovoltaic panel is disposed on the top cover, and the solar photovoltaic panel is electrically connected to the rechargeable battery.

Optionally, the top cover has a loose porous structure.

Optionally, the base and the top cover both have an elliptical shape.

Optionally, the second end of the double-layer adjusting plate is provided with a magnetic stripe; when the double-layer adjusting plate is in the closed state, an attractive force is generated between the magnetic stripes on the two double-layer adjusting plates.

Optionally, the base is provided with a groove, the propeller is connected to the groove through a telescopic arm, and the propeller is capable of extending out of the base through the telescopic arm.

Optionally, the fish egg attachment substrate includes aquatic plants, gravel, pebbles, fine sand and sediment.

The present invention further provides an operation method of a habitat construction apparatus for fishes with adhesive and demersal eggs in a river, applied to the habitat construction apparatus for fishes with adhesive and demersal eggs, the operation method including the following steps:

S1. arranging the habitat construction apparatus in a first region, adjusting the double-layer adjusting plate to the closed state, and adjusting a height of the habitat construction apparatus by the lifting assembly to 1/3 to 2/3 of a maximum height of the lifting post;

S2. pushing, by the propeller, the habitat construction apparatus to advance, acquiring, according to the ultrasonic probe and the camera in an advancing process, a water area in which fishes producing adhesive and demersal eggs gather, and pushing the habitat construction apparatus by the propeller to the water area, and fixing the habitat construction apparatus on a river bed by the anchoring component;

S3. adjusting the double-layer adjusting plate to the open state, adjusting the height of the habitat construction apparatus to the maximum height by the lifting assembly, and adjusting the angle of the movable sheet;

S4. after a preset time, adjusting the double-layer adjusting plate to the closed state, and adjusting the height of the habitat construction apparatus to 1/3 to 2/3 of the maximum height by the lifting assembly; and

S5. debonding fish eggs; and

S6. after the fish eggs are detected to hatch into larvae by the fish monitoring and positioning system, loosening the anchoring component, pushing, by the propeller, the habitat construction apparatus to move, acquiring a location of releasing larvae in a moving process, moving the habitat construction apparatus to the location of releasing larvae, adjusting the double-layer adjusting plate to the open state, and releasing larvae.

The present invention has the following advantages:

1. In the habitat construction apparatus for fishes with adhesive and demersal eggs in the river provided in the present invention, the floating top cover, the telescopic lifting post, and the support for the lifting post can make the entire set of facilitates to automatically lift and low along with changes in water level, to adequately adapt to changes in water level of a river. The fish meal feeder and the disinfectant bottle are provided in the cavity of the lifting post. Fish meal helps to attract fishes in an olfactory manner to enter the facilitates and helps to reduce risks as well as injuries and deaths from predation during foraging of larvae. A disinfectant can prevent a water body near the facilitates from infection of bacteria and viruses, thereby lowering the morbidity and mortality of fishes. The movable sheets of the intelligent double-layer adjusting plate provided in the present invention can swing vertically by 0° to 90°, which helps to adjust a water flow field and construct an appropriate habitat threshold in an egg collection region. The air pump uses the second micro nozzle to continuously spray air to form a micro-current environment and increase dissolved oxygen in the water body and construct habitat conditions for hatching fish eggs. Spawning ground habitat is constructed. Through scientific hatching of fish eggs and dam crossing of larvae, full life cycle protection is implemented for fish eggs, larvae, and adult fishes, and dam crossing of fishes in upstream and downstream regions of the dam is facilitated, thereby helping to protect fish resources and biodiversity and maintaining the structure and function of the water ecosystem. The apparatus can promote natural reproduction of fish population, overcome deficiencies in artificial fish stocking, help to alleviate the contradiction between the development and utilization of hydroelectric resources and water ecological protection, and can be used as an important technical support for water ecological restoration and fish resource protection.

2. In the habitat construction apparatus for fishes with adhesive and demersal eggs provided in the present invention, the habitat factor monitoring system includes a flow rate sensor, a water level sensor, a water temperature sensor, and an illuminance sensor that are disposed on an outer side surface of the support for the lifting post, the intelligent control system is respectively communicatively connected to the flow rate sensor, the water level sensor, the water temperature sensor, and the illuminance sensor. The habitat factor monitoring system performs detection by using the intelligent control system, and can detect factors such as a water flow rate, water temperature, and illuminance that affect the hatching of fish eggs in the habitat construction apparatus, so that habitat data can be better acquired.

3. In the habitat construction apparatus for fishes with adhesive and demersal eggs provided in the present invention, the electric heating sheet is disposed at the lifting post arranged on the non-flowfacing surface, and the intelligent control system is electrically connected to the electric heating sheet. After the camera recognizes a large number of fish eggs, the intelligent control system controls the electric heating sheet to control the water temperature within a temperature interval of 18°C to 22°C suitable for egg laying of target fishes producing adhesive and demersal eggs. The electric heating sheet further increases the temperature in a fish egg hatching stage and keeps the water temperature at a suitable hatching temperature of 25°C to 28°C, thereby accelerating the hatching of fish eggs and reducing saprolegniasis caused by low water temperature.

4. In the habitat construction apparatus for fishes with adhesive and demersal eggs provided in the present invention, the solar photovoltaic panel converts solar energy into electrical energy and supplies the electrical energy to the rechargeable battery. The rechargeable battery is connected to the solar photovoltaic panel through a cable and provides power supply to the facilities.

5. In the habitat construction apparatus for fishes with adhesive and demersal eggs provided in the present invention, the top cover has a loose porous structure and can weaken the impact of a surface water flow on the top cover and reduce the shaking amplitude of the entire set of apparatus.

6. In the habitat construction apparatus for fishes with adhesive and demersal eggs provided in the present invention, the base and the top cover both have an elliptical shape. During arrangement, long axes of the base and the top cover are in a water flow direction, thereby reducing the impact of the arrangement of the apparatus on a flow cross section, and helping the entire set of apparatus to cross a dam through a channel after fish eggs are hatched.

7. In the habitat construction apparatus for fishes with adhesive and demersal eggs provided in the present invention, the fish egg attachment substrate includes aquatic plants, gravel, pebbles, fine sand and sediment, so that the reproduction of fishes that have different water depth requirements and living habits and lay adhesive and demersal eggs can be satisfied.

**BRIEF DESCRIPTION OF THE DRAWING**

To describe the technical solutions in specific implementations of the present invention or the prior art more clearly, the following briefly introduces the accompanying drawings required for describing the specific implementations or the prior art. Apparently, the accompanying drawings in the following description show some implementations of the present invention, and a person of ordinary skill in the art may still derive other drawings from these accompanying drawings without creative efforts.

FIG. 1 is an overall schematic diagram of a habitat construction apparatus for fishes with adhesive and demersal eggs according to the present invention;

FIG. 2 is a schematic diagram of the overall structure in FIG. 1 being closed;

FIG. 3 is a schematic diagram of a lifting post according to the present invention;

FIG. 4 is a schematic diagram of a support for a lifting post according to the present invention;

FIG. 5 is a schematic diagram of a base according to the present invention;

FIG. 6 is a schematic diagram of a double-layer adjusting plate according to the present invention.

Reference numerals:
1, lifting post; 11, fish meal feeder; 12, disinfectant bottle; 13, storage tank for talcum powder suspension; 14, water tank; 15, mute pump; 16, electric heating sheet; 2, support for a lifting post; 21, non-woven fabric; 3, top cover; 31, air pump; 32, first micro nozzle; 33, solar photovoltaic panel; 4, base; 41, airbag; 42, propeller; 43, groove; 44, second micro nozzle; 5, anchoring component; 6, double-layer adjusting plate; 61, gauze layer; 62, foldable layer; 63, movable sheet; 7, fish monitoring and positioning system; 71, ultrasonic probe; 72, camera; 73, GPS locator; 74, fish attracting lamp; 8, habitat factor monitoring system; 81, flow rate sensor; 82, water level sensor; 83, water temperature sensor; 84, illuminance sensor; 9, rechargeable battery; and 10, intelligent control system.

**DETAILED DESCRIPTION**

The following clearly and completely describes the technical solutions of the present invention with reference to the accompanying drawings. Apparently, the described embodiments are merely some rather than all of the embodiments of the present invention. All other embodiments obtained by a person of ordinary skill in the art based on the embodiments of the present invention without creative efforts shall fall within the protection scope of the present invention.

In the description of the present invention, it needs to be understood that orientation or location relationships indicated by terms "center", "up", "down", "left", "right", "vertical", "horizontal", "inside", and "outside" are based on orientation or location relationships shown in the accompanying drawings, and are only used to facilitate description of the present invention and simplify description, but are not used to indicate or imply that the apparatuses or elements must have specific orientations or are constructed and operated by using specific orientations, and therefore, cannot be understood as a limit to the present invention. In addition, the terms "first", "second", and "third" are used only for description, but are not intended to indicate or imply relative importance.

In the description of the present invention, it needs to be noted that unless otherwise expressly specified and defined, "mounted", "connected", and "connection", should be understood in a broad sense, for example, fixedly connected, detachably connected or integrally connected; or mechanically connected or electrically connected; or connected directly or indirectly through an intermediate, or two elements communicated internally. For a person of ordinary skill in the art, specific meanings of the terms in the present invention should be understood according to specific cases. Further, the term *mute* pump is interchangeable with the term *silent* pump.

In addition, the technical features involved in different implementations of the present invention described below can be combined with each other as long as they do not constitute a conflict between them.

Embodiment 1

This embodiment provides a habitat construction apparatus for fishes with adhesive and demersal eggs.

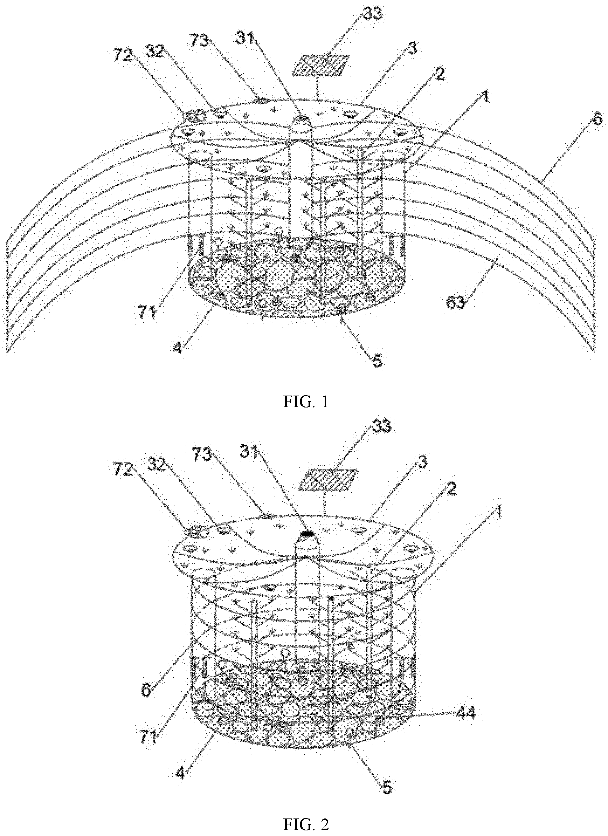

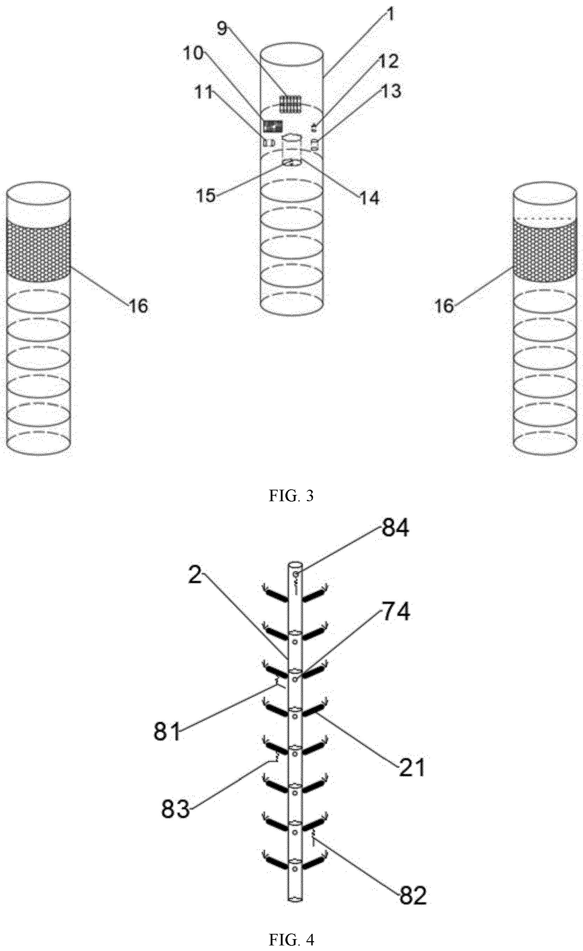

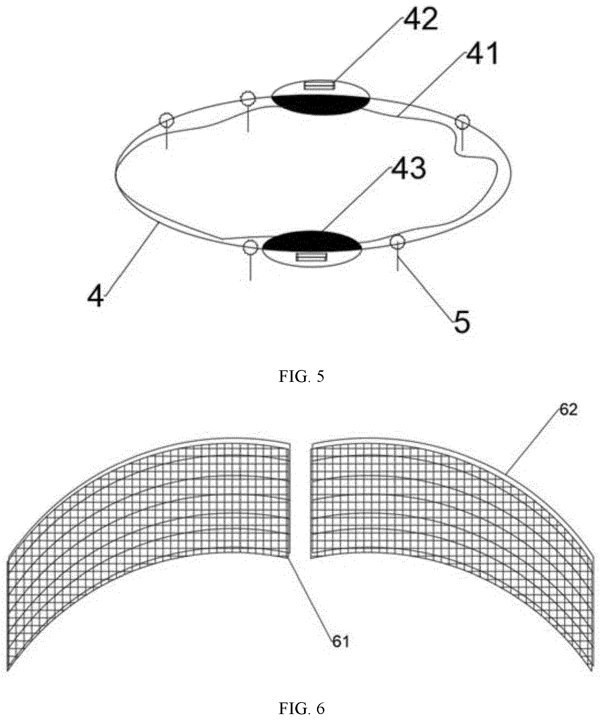

In an implementation, as shown in FIG. 1 to FIG. 6, the habitat construction apparatus for fishes with adhesive and demersal eggs includes a base 4, a top cover 3, an anchoring component 5, an elevation assembly, a double-layer adjusting plate 6, a propeller 42, a fish monitoring and positioning system, an intelligent control system 10, and a rechargeable battery 9.

The top cover 3 can float on water surface, and has a plurality of first micro nozzles 32 uniformly distributed on the lower surface of the top cover 3. An air pump 31 is disposed on the top cover 3. The base 4 is provided with a fish egg attachment substrate thereon. An airbag 41 and a second micro nozzle 44 are disposed on the base 4. The air pump 31 is connected to the second micro nozzle 44 through a first connecting pipe. The air pump 31 is connected to the airbag 41 through a second connecting pipe. When the air pump 31 operates, the second micro nozzle 44 continuously sprays air to form a micro-current environment and increase dissolved oxygen in a water body and construct habitat conditions for hatching fish eggs. The anchoring component 5 is connected to the base 4. The anchoring component 5 is fixed on a river bed and can fix the entire apparatus. A lifting assembly is disposed on the base 4 and supported below the top cover 3. The lifting assembly includes a plurality of lifting posts 1 distributed at intervals in a circumferential direction of the base 4. The lifting post 1 is provided with a cavity. A fish meal feeder 11, a disinfectant bottle 12, a storage tank for talcum powder suspension 13, and a water tank 14 are installed in the cavity. The outlets of the fish meal feeder 11, the disinfectant bottle 12 and the storage tank for talcum powder suspension 13 are all equipped with one-way solenoid valves. The outlets of the disinfectant bottle 12 and the storage tank for talcum powder suspension 13 are both connected to the water tank 14. A mute pump 15 is disposed in the water tank 14. The mute pump 15 is connected to the first micro nozzles 32 through a third connecting pipe. The lifting assembly further includes a plurality of supports for a lifting post 2 disposed between the top cover 3 and the base 4. The support for the lifting post 2 includes a liftable and lowerable post body and a support rod distributed on the liftable and lowerable post body in a branch form. A non-woven fabric 21 containing plant nutrient solution is provided on the support rod. The non-woven fabric 21 is covered with aquatic plants. The outlet of the fish meal feeder 11 is connected to the support for the lifting post 2 through a fourth connecting pipe. Two double-layer adjusting plates 6 are symmetrically disposed. A first end of the double-layer adjusting plate 6 is connected through a hinge to a lifting post 1 arranged on a flow-facing surface and is foldable along with lifting and lowering of the lifting post 1. The double-layer adjusting plate 6 has a closed state and an open state. When the double-layer adjusting plate 6 is in the closed state, second ends of the two double-layer adjusting plates 6 are joined to make the double-layer adjusting plates 6, the base 4, and the top cover 3 define a closed fish egg incubation space. The double-layer adjusting plate 6 includes a gauze layer 61 and a foldable layer 62. The gauze layer 61 is provided with meshes with a diameter smaller than that of fish eggs. After the double-layer adjusting plates 6 are closed, the gauze layer 61 keeps fish eggs from being flushed away by water flow. The foldable layer 62 includes a plurality of arc-shaped movable sheets 63. Two adjacent movable sheets 63 are connected through a connecting member. An angle of the movable sheet 63 can be adjusted through the connecting member. The propeller 42 is connected to the base 4 and can drive the habitat construction apparatus to move.

The fish monitoring and positioning system includes a camera 72 and a GPS locator 73 that are disposed on the top cover 3 and an ultrasonic probe 71 disposed on an outer side surface of an lifting post 1 on a non-flow-facing surface. Specifically, the fish monitoring and positioning system can monitor the activity of fishes and locate a fish school by using the ultrasonic probe 71, the camera 72, and the GPS locator 73, and recognize fishes by using a convolutional neural network algorithm with deep learning in the intelligent control system 10. An appropriate habitat threshold range is constructed in an egg collection region: a flow of 2800 $m^3$/s to 8000 $m^3$/s, a flow rate of 0.8 m/s to 1.5 m/s, and a water temperature of 18°C to 22°C, so that egg laying habitat requirements of target fishes producing adhesive and demersal eggs are satisfied.

The intelligent control system is disposed in the cavity, and is communicatively connected to a first drive mechanism driving the hinge to rotate, a second drive mechanism driving the connecting member to rotate, the camera 72, the GPS locator 73, the ultrasonic probe 71, and the one-way solenoid valves. The rechargeable battery is disposed in the cavity, and is electrically connected to the intelligent control system. The rechargeable battery is connected to all powered equipment and continuously supplies power to the apparatus.

In this implementation, during actual running, the habitat construction apparatus is first arranged in a first region. The first region may be an upstream region or a downstream region of a dam. The double-layer adjusting plate 6 is adjusted to the closed state, and the height of the habitat construction apparatus is adjusted to 1/2 of the maximum height by the lifting assembly. The entire apparatus has a relatively small volume, and is submerged in water. The airbag 41 is inflated through the air pump 31. After inflation, the habitat construction apparatus is pushed by the propeller 42 to advance. A water area in which fishes producing adhesive and demersal eggs gather is acquired according to the ultrasonic probe 71 and the camera 72 in an advancing process. The camera 72 shoots underwater pictures. Collected sound wave signals and image information are transmitted in real time to the intelligent control system 10 for processing. After morphologic processing, a fish school quantity is counted through contours, and fish school density information of the acquired images is calculated. A convolutional neural network is trained by using the images according to typical fish shapes of fishes producing adhesive and demersal eggs. A trained mature neural network can accurately determine fish species in acquired fish images. The fish monitoring and positioning system can automatically approach, according to processed information provided by the ultrasonic probe 71 and the camera 72, the water area in which fishes producing adhesive and demersal eggs gather. The habitat construction apparatus is pushed by the propeller 42 to the water area, and the habitat construction apparatus is fixed on a river bed by the anchoring component 5. Subsequently, the double-layer adjusting plate 6 is adjusted to the open state. The height of the habitat construction apparatus is adjusted to the maximum height by the lifting assembly, and the angle of the movable sheet 63 is adjusted. An unfolding angle of the movable sheet 63 is adjusted to control the volume of water flow, to create a water flow environment favorable to fishes and attract fishes to lay eggs. The double-layer adjusting plate 6 slows down water flow to facilitate the adhesion and settlement of fish eggs. The non-woven fabric 21 containing plant nutrient solution on the support for the lifting post 2 can keep long-time growth and survival of aquatic plants, which can purify water quality and increase dissolved oxygen. The fish meal feeder 11 is switched on according to the density of target fishes detected by the fish monitoring and positioning system. The one-way solenoid valve at the outlet of the fish meal feeder 11 opens or closes the outlet by using the intelligent control system. The fish meal feeder 11 is discharged the fish meal outside the support for the lifting post 2 through a fourth connecting pipe. After fish eggs have been collected for a preset time, for example, three days, the double-layer adjusting plate 6 is adjusted to the closed state, and the height of the habitat construction apparatus is adjusted to 1/2 of the maximum height by the lifting assembly. Subsequently, the fish eggs are debonded. Specifically, the fish eggs are debonded through vibration or by using a servo motor to drive the support for the lifting post 2 to rotate. After the adhesiveness is removed, the fish eggs sink under gravity. The fish egg attachment substrate on the base 4 can bond and receive demersal and adhesive eggs. The second micro nozzle 44 on the base 4 starts to spray air to keep the fish eggs floating, to prevent the fish eggs from accumulation and corruption. The one-way solenoid valve of the disinfectant bottle 12 is opened twice periodically every day to feed a disinfectant into the water tank 14. After the fish eggs are successfully hatched into larvae that can consume food, the larvae can feed on crumbs retained on aquatic plants and the fish egg attachment substrate. After the fish eggs are detected to hatch into larvae by the fish monitoring and positioning system, the anchoring component 5 is loosened, the propeller 42 pushes the habitat construction apparatus to move, and a location of releasing larvae is acquired in a moving process. When the first region is a downstream region of the dam, the location of releasing larvae may be in an upstream region of the dam. When the first region is an upstream region of the dam, the location of releasing larvae may be in a downstream region of the dam. The habitat construction apparatus is moved to the location of releasing larvae, the double-layer adjusting plate 6 is adjusted to the open state, and larvae is released. Therefore, the exchange and reproduction of fishes in upstream and downstream regions of the dam can be implemented, thereby protecting catchment biodiversity and habitat diversity under the influence of human activities.

The movable sheet 63 can swing vertically by 0° to 90° under the control of the intelligent control system 10 to adjust a water flow field. The periphery of the gauze layer 61 is fixed at the periphery of the foldable layer 62. The foldable layer 62 can adjust a folding extent under the control of the intelligent control system 10, to adjust the flow rate of water flow in the facilities. The foldable layer 62 with different heights can construct water flow conditions of different flow rates. When the folding extent of the movable sheets 63 of the foldable layers 62 at the upper and middle portions of the double-layer adjusting plate 6 is increased, a flow rate less than 1.0 m/s is constructed, to attract fishes that like static and slow current and produce adhesive eggs, for example, carp and crucian carp in the Yangtze River basin, to lay eggs on aquatic plants that grow on the non-woven fabric 21 on an outer side of the support for the lifting post 2. When the folding extent of the movable sheet 63 of the foldable layer 62 at the lower portion of the double-layer adjusting plate 6 is reduced, a flow rate of 1.0 m/s to 1.5 m/s is constructed, to attract fishes that like rapid current, live in middle and bottom water layers, and produce adhesive and demersal eggs, for example, Spinibarbus sinensis, Chinese longsnout catfish, Chinese high-fin banded shark, and Pseudobagrus nitidus, to lay eggs on the surface of pebbles and gravel of the base 4. In addition, the quantity and species of fishes and their gathering regions are monitored according to the camera 72, and rotation angles of a plurality of movable sheets 63 are adjusted in a timely and flexible manner, to construct flow field conditions for attracting fishes. The diameter of the meshes of the gauze layer 61 is smaller than that of fish eggs, to keep the fish eggs from floating away through gaps between the movable sheets in a hatching process. The gauze layer 61 has a wrinkle structure and can adapt to changes in the rotation extent of the foldable layer 62.

Specifically, the running status of the one-way solenoid valves at the outlets of the fish meal feeder 11, the disinfectant bottle 12, and the storage tank for talcum powder suspension 13 are all controlled by the intelligent control system 10. The one-way solenoid valve at the outlet of the fish meal feeder 11 is connected to the support for the lifting post 2 through the fourth connecting pipe. The fish meal feeder 11 is switched on according to the density of target fishes detected by the fish monitoring and positioning system. The one-way solenoid valves at the outlets of the disinfectant bottle 12 and the storage tank for talcum powder suspension 13 are both in communication with the water tank 14 through a pipe. In a fish egg hatching stage, outflow rates of the disinfectant bottle 12 and the storage tank for talcum powder suspension 13 are both adjusted by the intelligent control system 10.

Based on the foregoing implementations, in a preferred implementation, the fish monitoring and positioning system further includes a fish attracting lamp 74 disposed outside the support for the lifting post 2, the color of the fish attracting lamp 74 is adjustable, and the fish attracting lamp 74 is communicatively connected to the intelligent control system.

The fish attracting lamp 74 has a color adjustment function. Because target fishes producing adhesive and demersal eggs usually inhabit in middle and bottom water layers, a weak light source is used for the color of the fish attracting lamp 74. A spectrum range is 410 $\mu$m to 650 $\mu$m. The color of the lamp light is dominated by white light, blueish white light, and blue light. Most species of fishes show positive phototaxis. For example, yellowhead catfish and carp prefer a blue light source. The fish attracting lamp 74 periodically emits light. The color of the lamp light is switched every 60 s. A switching interval between different colors of the lamp light is 30 s, to avoid long-time irradiation to keep fishes from visual fatigue, thereby avoiding a reduced fish attraction effect. The camera 72 transmits shot images to the intelligent control system 10. An optimal color for attracting a large number of fishes is determined based on quantities of gathering fishes, and the intelligent control system 10 controls the fish attracting lamp 74 to be adjusted to the optimal color to attract more fishes to lay eggs.

Based on the foregoing implementations, in a preferred implementation, the habitat construction apparatus for fishes with adhesive and demersal eggs further includes a habitat factor monitoring system. The habitat factor monitoring system includes a flow rate sensor 81, a water level sensor 82, a water temperature sensor 83, and an illuminance sensor 84 that are disposed on an outer side surface of the support for the lifting post 2. The intelligent control system is respectively communicatively connected to the flow rate sensor 81, the water level sensor 82, the water temperature sensor 83, and the illuminance sensor 84. An electric heating sheet 16 is disposed at the lifting post 1 arranged on the non-flow-facing surface. The intelligent control system is electrically connected to the electric heating sheet 16.

After the camera 72 recognizes a large number of fish eggs, the intelligent control system controls the electric heating sheet 16 to control the water temperature within a temperature interval of 18°C to 22°C suitable for egg laying of target fishes producing adhesive and demersal eggs. The electric heating sheet 16 further increases the temperature in a fish egg hatching stage and keeps the water temperature at a suitable hatching temperature of 25°C to 28°C, thereby accelerating the hatching of fish eggs and reducing saprolegniasis caused by low water temperature.

Specifically, the habitat factor monitoring system performs detection by using the intelligent control system, and can detect factors such as a water flow rate, water temperature, and illuminance that affect the hatching of fish eggs in the habitat construction apparatus, so that habitat data can be better acquired.

Based on the foregoing implementations, in a preferred implementation, a solar photovoltaic panel 33 is disposed on the top cover 3, and the solar photovoltaic panel 33 is electrically connected to the rechargeable battery.

Specifically, the solar photovoltaic panel 33 converts solar energy into electrical energy and supplies the electrical energy to the rechargeable battery 9. The rechargeable battery 9 is connected to the solar photovoltaic panel 33 through a cable and provides power supply to the entire apparatus.

Based on the foregoing implementations, in a preferred implementation, the top cover 3 has a loose porous structure. In this implementation, the top cover 3 has a loose porous structure and can weaken the impact of a surface water flow on the top cover 3 and reduce the shaking amplitude of the entire set of apparatus.

Based on the foregoing implementations, in a preferred implementation, the base 4 and the top cover 3 both have an elliptical shape. Specifically, during arrangement, long axes of the base 4 and the top cover 3 are in a water flow direction, thereby reducing the impact of the arrangement of the apparatus on a flow cross section, and helping the entire set of apparatus to cross a dam through a channel after fish eggs are hatched.

Based on the foregoing implementations, in a preferred implementation, the second end of the double-layer adjusting plate 6 is provided with a magnetic stripe; when the double-layer adjusting plate 6 is in the closed state, an attractive force is generated between the magnetic stripes on the two double-layer adjusting plates 6.

In an alternative preferred implementation, the magnetic stripes may be replaced with an electromagnetic holder, to make the two double-layer adjusting plates 6 attract more closely and facilitate control.

Based on the foregoing implementations, in a preferred implementation, the base 4 is provided with a groove 43, the propeller 42 is connected to the groove 43 through a telescopic arm, and the propeller 42 is capable of extending out of the base 4 through the telescopic arm. In this implementation, the base 4 is provided with the groove 43. When the entire set of apparatus does not need to move, the propeller 42 is disposed in the groove 43 and does not affect the fixation of the entire set of apparatus, and the propeller 42 is connected to the groove 43 through the telescopic arm. The propeller 42 extends out of the base 4 and is still connected to the base 4.

Specifically, the apparatus is arranged in upstream and downstream waters of a dam during a peak period of fish egg laying. In an initial state, the double-layer adjusting plates 6 are closed. The lifting posts 1 and the plurality of supports for the lifting post 2 are shortened to 1/2 of the highest state. The entire apparatus is submerged in water with the smallest volume, and advances by using the power of the propeller 42.

The camera 72 recognizes target fish species. When recognizing fishes producing adhesive and demersal eggs represented by Chinese high-fin banded shark, Dabry's sturgeon, Pseudobagrus nitidus, Chinese longsnout catfish, Spinibarbus hollandi, carp, and crucian carp, the propeller 42 slowly drives the facilities to perform detection underwater according to a "Z"-shaped path. The ultrasonic probe 71 and the GPS locator 73 continuously monitor and locate a target fish school in real time. Data is transmitted to the intelligent control system 10. The intelligent control system 10 divides data acquired in navigational detection into n navigational sections, and an average areal density $\rho_s$ is calculated.

$$\rho_s = \sum_{i=1}^{n} N_i / \sum_{i=1}^{n} S_i$$

. $\rho_s$ is an average areal density of a target fish school quantity. $N_i$ is a quantity of individual targets in each navigational section and is obtained by using a target tracking counting algorithm. $S_i$ is a corresponding ultrasound scan water area. An advancing direction is determined according to the calculated average areal density $\rho_s$ of the target fish school quantity. The propeller 42 is equipped with devices to search for an appropriate egg laying point with a high average areal density $\rho_s$ of the target fish school. After the position is determined, the propeller 42 is retracted into the groove 43. The anchoring component 5 rotates to fix the base 4 in a natural river bed.

Based on the foregoing implementations, in a preferred implementation, the fish egg attachment substrate is aquatic plants, gravel, pebbles, fine sand and sediment. The aquatic plants are grown on the non-woven fabric 21 of the plurality of supports for the lifting post 2. Rich nutrients allow aquatic plants to live for a long time in water, to satisfy the requirement of fishes with fish eggs adhered to aquatic plants for an egg laying substrate. The gravel, pebbles, fine sand and sediment are arranged on the surface of the base 4. The pebbles and the gravel are arranged staggered. The fine sand is filled in gaps between the pebbles and the gravel, so that a relatively large habitat space can be provided for benthic fishes producing adhesive and demersal eggs, to construct habitat conditions suitable for egg laying and hatching of various fishes that produce adhesive and demersal eggs, for example, carp, crucian carp, Spinibarbus sinensis, Chinese longsnout catfish, Chinese high-fin banded shark, and Pseudobagrus nitidus, to provide excellent selection for the mating and breeding of such fishes. The color of the pebbles and the gravel is dark gray and is close to the color of the fish body, which facilitates the hiding of the fishes.

The habitat construction apparatus for fishes with adhesive and demersal eggs provided in the present invention can be arranged in upstream and downstream waters of a dam. For fishes that cannot cross the dam during fish channel migration and produce adhesive and demersal eggs, the habitat construction apparatus can be used to implement gene exchange of fishes in upstream and downstream regions of the dam, thereby reducing the adverse impact caused by dam construction on migratory fishes.

Embodiment 2

This embodiment provides an operation method of a habitat construction apparatus for fishes with adhesive and demersal eggs, including the habitat construction apparatus for fishes with adhesive and demersal eggs provided in this embodiment. The operation method includes the following steps:

S1. arranging the habitat construction apparatus in a first region, adjusting the double-layer adjusting plate 6 to the closed state, and adjusting a height of the habitat construction apparatus by the lifting assembly to 1/3 to 2/3 of a maximum height;

S2. pushing, by the propeller 42, the habitat construction apparatus to advance, acquiring, according to the ultrasonic probe 71 and the camera 72 in an advancing process, a water area in which fishes producing adhesive and demersal eggs gather, and pushing the habitat construction apparatus by the propeller 42 to the water area, and fixing the habitat construction apparatus on a river bed by the anchoring component 5;

S3. adjusting the double-layer adjusting plate 6 to the open state, adjusting the height of the habitat construction apparatus to the maximum height by the lifting assembly, and adjusting the angle of the movable sheet 63;

S4. after a preset time, adjusting the double-layer adjusting plate 6 to the closed state, and adjusting the height of the habitat construction apparatus to 1/3 to 2/3 of the maximum height by the lifting assembly;

S5. debonding fish eggs;

S6. after the fish eggs are detected to hatch into larvae by the fish monitoring and positioning system, loosening the anchoring component 5, pushing, by the propeller 42, the habitat construction apparatus to move, acquiring a location of releasing larvae in a moving process, moving the habitat construction apparatus to the location of releasing larvae, adjusting the double-layer adjusting plate 6 to the open state, and releasing larvae.

Specifically, the apparatus is arranged in upstream and downstream waters of a dam during a peak period of fish egg laying. In an initial state, the double-layer adjusting plates 6 are closed. The lifting posts 1 and the plurality of supports for the lifting post 2 are shortened to 1/2 of the highest state. The entire apparatus is submerged in water with the smallest volume, and advances by using the power of the propeller 42. The ultrasonic probe 71 in the fish monitoring and positioning system emits sound wave signals. In addition, the camera 72 shoots underwater pictures. Collected sound wave signals and image information are transmitted in real time to the intelligent control system 10 for processing. After morphologic processing, a fish school quantity is counted through contours, and fish school density information of the acquired images is calculated. A convolutional neural network is trained by using the images according to typical fish shapes of fishes producing adhesive and demersal eggs. A trained mature neural network can accurately determine fish species in acquired fish images. The fish monitoring and positioning system can automatically approach, according to processed information provided by the ultrasonic probe 71 and the camera 72, the water area in which fishes producing adhesive and demersal eggs gather, and select an area that has a relatively flat river bed, a water depth exceeding the height of the apparatus, and a sand substrate to stop and fix the apparatus. After the stop position is determined, the intelligent control system 10 transmits signals and instructions to the servo motor to drive four high-grip anchors to extend and penetrates into the river bed to fix the entire set of facilities on the river bed.

The intelligent control system 10 adjusts the double-layer adjusting plate 6. The lifting posts 1 and the plurality of supports for the lifting post 2 are lifted to twice the original height. The gauze layer 61 of the double-layer adjusting plate 6 has a hole diameter size of 20 meshes, and unfolds together with the foldable layers 62 on an outer side. The unfolding angle of the movable sheet 63 can be adjusted to control the volume of water flow, to construct a water flow environment favorable to fishes and attract fishes to lay eggs. The double-layer adjusting plate 6 slows down water flow to facilitate the adhesion and settlement of fish eggs. The non-woven fabric 21 containing rich nutrient solution on the surface of the plurality of supports for the lifting post 2 can keep long-time growth and survival of aquatic plants.

A pristine egg laying habitat formed by natural aquatic plants, pebbles with various particle sizes, gravel, and sediment are arranged on the surface of the base 4. The aquatic plants on the plurality of supports for the lifting post 2 can purify water quality and increase dissolved oxygen. The stony and sandy substrate arranged on the surface of the base 4 can bond and receive demersal and adhesive eggs, and the requirements of some fishes that produce adhesive and demersal eggs and like to lay eggs in sediment can be satisfied.

After fish eggs have been collected for three days, the double-layer adjusting plate 6 receives a turn-off signal of the intelligent control system 10. The foldable layers 62 on the outer side are closed. The lifting posts 1 and the plurality of supports for the lifting post 2 are accordingly reduced to a 1/2 height. The height of the plurality of supports for the lifting post 2 is controlled to be 10 cm away from aquatic plants, to keep aquatic plants from pressing and damaging fish eggs.

Further, the servo motor drives a support rotating shaft connected to a surface plate of the base 4 to rotate. Two supports for the lifting post 2 are fixed. One support for the lifting post 2 rotates along with the support rotating shaft. Fish eggs are debonded through vibration. After the adhesiveness is removed, the fish eggs sink under gravity. The second micro nozzle 44 on the surface of the base starts to spray air to keep the fish eggs floating, to prevent the fish eggs from accumulation and corruption. The one-way solenoid valve of the disinfectant bottle 12 is opened twice periodically every day to feed a disinfectant into the water tank 14. The electric heating sheet 16 heats water current, and controls the water temperature to be about 20°C. The slightly high water temperature accelerates the hatching of fish eggs. After the fish eggs are successfully hatched into larvae that can consume food, the larvae can feed on crumbs retained on aquatic plants and the substrate.

After the intelligent control system 10 uses the fish monitoring and positioning system to detect that a large number of fish eggs are successfully hatched into larvae that can consume food, the anchoring component 5 is loosened, and at the same time, the air pump 31 starts to inflate the airbag 41. The propeller 42 is turned on. The habitat construction apparatus for fishes with adhesive and demersal eggs is completely detached from the river bed. The apparatus searches for a channel in real time according to information detected by the camera 72 and the GPS locator 73, and reaches an upstream region of the dam through the channel. Upstream habitat information of the dam is acquired according to the fish monitoring and positioning system and the habitat factor monitoring system, and an appropriate location of releasing larvae is found in an upstream region. An appropriate habitat can increase the survival rate of larvae. The facilities can also continue to collect fish eggs in the upstream region in the same manner, and transfer other upstream larvae to a downstream region of the dam, to implement the exchange and reproduction of fishes in upstream and downstream regions of the dam, thereby protecting catchment biodiversity and habitat diversity under the influence of human activities.

Obviously, the foregoing embodiments are merely examples for clear description, rather than a limitation to implementations. For a person of ordinary skill in the art, other changes or variations in different forms may also be made based on the foregoing description. All implementations cannot and do not need to be exhaustively listed herein. Obvious changes or variations that are derived there from still fall within the protection scope of the invention of the present invention.

**Claims**

1. A habitat construction apparatus for fishes with adhesive and demersal eggs in a river, wherein said apparatus comprises:

a top cover (3), which can float on water surface, has a plurality of first micro nozzles (32) uniformly distributed on the lower surface of the top cover (3), and an air pump (31) is disposed on the top cover (3);
a base (4), provided with a fish egg attachment substrate thereon, wherein an airbag (41) and a second micro nozzle (44) are disposed on the base (4), the air pump (31) is connected to the second micro nozzle (44) through a first connecting pipe, and the air pump (31) is connected to the airbag (41) through a second connecting pipe;
an anchoring component (5) is connected to the base (4);
a lifting assembly, disposed on the base (4) and supported below the top cover (3), wherein the lifting assembly comprises a plurality of lifting posts (1) distributed at intervals in a circumferential direction of the base (4), the lifting post (1) is provided with a cavity, a fish meal feeder (11), a disinfectant bottle (12), a storage tank for talcum powder suspension (13), and a water tank (14) are installed in the cavity, the outlets of the fish meal feeder (11), the disinfectant bottle (12) and the storage tank for talcum powder suspension (13) are all equipped with one-way solenoid valves, the outlets of the disinfectant bottle (12) and the storage tank for talcum powder suspension (13) are both connected to the water tank (14), a silent pump (15) is disposed in the water tank (14), the silent pump (15) is connected to the first micro nozzles (32) through a third connecting pipe, the lifting assembly further comprises a plurality of supports for a lifting post (2) disposed between the top cover (3) and the base (4), each of the support for the lifting post (2) comprises a liftable and lowerable post body and a support rod distributed on the liftable and lowerable post body in a branch form, a non-woven fabric (21) containing plant nutrient solution is provided on the support rod, the non-woven fabric (21) is covered with aquatic plants, and the outlet of the fish meal feeder (11) is connected to the support for the lifting post (2) through a fourth connecting pipe;
a double-layer adjusting plate (6), wherein two double-layer adjusting plates are symmetrically disposed with the lifting post arranged on a flow-facing surface, a first end of the double-layer adjusting plate (6) is connected through a hinge to a lifting post (1) arranged on a flow-facing surface and is foldable along with lifting and lowering of the lifting post (1), the double-layer adjusting plate (6) has a closed state and an open state, when the double-layer adjusting plate (6) is in the closed state, second ends of the two double-layer adjusting plates (6) are joined to make the double-layer adjusting plates (6), the base (4), and the top cover (3) define a closed fish egg incubation space, the double-layer adjusting plate (6) comprises a gauze layer (61) and a foldable layer (62), the gauze layer (61) is provided with meshes with a diameter smaller than that of fish eggs, the foldable layer (62) comprises a plurality of arc-shaped movable sheets (63), two adjacent movable sheets (63) are connected through a connecting member, and an angle of the movable sheet (63) can be adjusted through the connecting member;
a propeller (42), connected to the base (4), and capable of driving the base (4) to move;
a fish monitoring and positioning system, comprising a camera (72) and a GPS locator (73) that are disposed on the top cover (3) and an ultrasonic probe (71) disposed on an outer side surface of an lifting post (1) on a non-flow-facing surface;
an intelligent control system (10), disposed in the cavity, and communicatively connected to a first drive mechanism driving the hinge to rotate, a second drive mechanism driving the connecting member to rotate, the camera (72), the GPS locator (73), the ultrasonic probe (71), and the one-way solenoid valves;
a rechargeable battery (9), disposed in the cavity, and electrically connected to the intelligent control system.

2. The habitat construction apparatus for fishes with adhesive and demersal eggs in a river according to claim 1, **characterized in that** the fish monitoring and positioning system further comprises a fish attracting lamp (74) disposed outside the support for the lifting post (2), the color of the fish attracting lamp (74) is adjustable, and the fish attracting lamp (74) is communicatively connected to the intelligent control system.

3. The habitat construction apparatus for fishes with adhesive and demersal eggs in a river according to claim 2, **characterized in that** the habitat construction apparatus oriented to reproduction requirements of fishes with adhesive and demersal eggs further comprises a habitat factor monitoring system, the habitat factor monitoring system comprises a flow rate sensor (81), a water level sensor (82), a water temperature sensor (83), and an illuminance sensor (84) that are disposed on an outer side surface of the support for the lifting post (2), the intelligent control system is respectively communicatively connected to the flow rate sensor (81), the water level sensor (82), the water temperature sensor (83), and the illuminance sensor (84);
an electric heating sheet (16) is disposed at the lifting post (1) arranged on the non-flow-facing surface, and the intelligent control system is electrically connected to the electric heating sheet (16).

4. The habitat construction apparatus for fishes with adhesive and demersal eggs in a river according to claim 1, **characterized in that** a solar photovoltaic panel (33) is disposed on the top cover (3), and the solar photovoltaic panel (33) is electrically connected to the rechargeable battery.

5. The habitat construction apparatus for fishes with adhesive and demersal eggs in a river according to claim 1, **characterized in that** the top cover (3) has a porous structure.

6. The habitat construction apparatus for fishes with adhesive and demersal eggs in a river according to claim 5, **characterized in that** the base (4) and the top cover (3) both have an elliptical shape.

7. The habitat construction apparatus for fishes with adhesive and demersal eggs in a river according to claim 1, **characterized in that** the second end of the double-layer adjusting plate (6) is provided with a magnetic stripe; when the double-layer adjusting plate (6) is in the closed state, an attractive force is generated between the magnetic stripes on the two double-layer adjusting plates (6).

8. The habitat construction apparatus for fishes with adhesive and demersal eggs in a river according to claim 1, **characterized in that** the base (4) is provided with a groove (43), the propeller (42) is connected to the groove (43) through a telescopic arm, and the propeller (42) is capable of extending out of the base (4) through the telescopic arm.

9. The habitat construction apparatus for fishes with adhesive and demersal eggs in a river according to claim 1, **characterized in that** the fish egg attachment substrate comprises aquatic plants, gravel, pebbles, fine sand and sediment.

10. An operation method of a habitat construction apparatus for fishes with adhesive and demersal eggs in a river, applied to the habitat construction apparatus oriented to reproduction requirements of fishes with adhesive and demersal eggs according to any one of claims 1 to 9, the operation method comprising the following steps:

S1. arranging the habitat construction apparatus in a first region, adjusting the double-layer adjusting plate (6) to the closed state, and adjusting a height of the habitat construction apparatus by the lifting assembly to 1/3 to 2/3 of a maximum height of the lifting post (1);
S2. pushing, by the propeller (42), the habitat construction apparatus to advance, acquiring, according to the ultrasonic probe (71) and the camera (72) in an advancing process, a water area in which fishes producing adhesive and demersal eggs gather, and pushing the habitat construction apparatus by the propeller (42) to the water area, and fixing the habitat construction apparatus on a river bed by the anchoring component (5);
S3. adjusting the double-layer adjusting plate (6) to the open state, adjusting the height of the habitat construction apparatus to the maximum height by the lifting assembly, and adjusting the angle of the movable sheet (63);
S4. after a preset time, adjusting the double-layer adjusting plate (6) to the closed state, and adjusting the height of the habitat construction apparatus to 1/3 to 2/3 of the maximum height by the lifting assembly;
S5. debonding fish eggs;
S6. after the fish eggs are detected to hatch into larvae by the fish monitoring and positioning system, loosening the anchoring component (5), pushing, by the propeller (42), the habitat construction apparatus to move, acquiring a location of releasing larvae in a moving process, moving the habitat construction apparatus to the location of releasing larvae, adjusting the double-layer adjusting plate (6) to the open state, and releasing larvae.

**Patentansprüche**

1. Habitatbauvorrichtung für Fische mit klebrigen und demersalen Eiern in einem Fluss, wobei die Vorrichtung Folgendes umfasst:

eine obere Abdeckung (3), die auf der Wasseroberfläche schwimmen kann, weist eine Vielzahl von ersten Mikrodüsen (32) auf, die gleichmäßig auf der unteren Fläche der oberen Abdeckung (3) verteilt sind, und eine Luftpumpe (31) ist auf der oberen Abdeckung (3) angeordnet; eine Basis (4), die mit einem Fischeibefestigungssubstrat darauf bereitgestellt ist, wobei ein Luftpolster (41) und eine zweite Mikrodüse (44) auf der Basis (4) angeordnet sind, die Luftpumpe (31) durch ein erstes Verbindungsrohr mit der zweiten Mikrodüse (44) verbunden ist und die Luftpumpe (31) durch ein zweites Verbindungsrohr mit dem Luftpolster (41) verbunden ist;

eine Verankerungskomponente (5) ist mit der Basis (4) verbunden;

eine Hebebaugruppe, die auf der Basis (4) angeordnet und unter der oberen Abdeckung (3) gestützt ist, wobei die Hebebaugruppe eine Vielzahl von Hebesäulen (1) umfasst, die in Abständen in einer Umfangsrichtung der Basis (4) verteilt sind, wobei die Hebesäule (1) mit einem Hohlraum bereitgestellt ist, eine Fischmehlfüttervorrichtung (11), eine Desinfektionsmittelflasche (12), ein Vorratsbehälter für Talkumpulversuspension (13) und ein Wassertank (14) in dem Hohlraum installiert sind, die Auslässe der Fischmehlfüttervorrichtung (11), der Desinfektionsmittelflasche (12) und des Vorratsbehälters für Talkumpulversuspension (13) alle mit Einwegmagnetventilen ausgestattet sind, die Auslässe der Desinfektionsmittelflasche (12) und des Vorratsbehälters für Talkumpulversuspension (13) beide mit dem Wassertank (14) verbunden sind, eine geräuscharme Pumpe (15) in dem Wassertank (14) angeordnet ist, die geräuscharme Pumpe (15) durch eine dritte Verbindungsleitung mit den ersten Mikrodüsen (32) verbunden ist, die Hebebaugruppe ferner eine Vielzahl von Stützen für eine Hebesäule (2) umfasst, die zwischen der oberen Abdeckung (3) und der Basis (4) angeordnet sind, jede der Stützen für die Hebesäule (2) einen heb- und senkbaren Säulenkörper und eine Stützstange umfasst, die auf dem heb- und senkbaren Säulenkörper in einer verzweigten Form verteilt ist, auf der Stützstange ein Pflanzennährlösung enthaltender Vliesstoff (21) bereitgestellt ist, der Vliesstoff (21) mit Wasserpflanzen bedeckt ist und der Auslass der Fischmehlfüttervorrichtung (11) durch ein viertes Verbindungsrohr mit der Stütze für die Hebesäule (2) verbunden ist; eine doppellagige Einstellplatte (6), wobei zwei doppellagige Einstellplatten symmetrisch mit der Hebesäule angeordnet sind, die auf einer strömungszugewandten Fläche angeordnet ist, ein erstes Ende der doppellagigen Einstellplatte (6) durch ein Scharnier mit einer Hebesäule (1) verbunden ist, das auf einer strömungszugewandten Fläche angeordnet und zusammen mit dem Heben und Senken der Hebesäule (1) klappbar ist, die doppellagige Einstellplatte (6) einen geschlossenen Zustand und einen offenen Zustand aufweist, wenn sich die doppellagige Einstellplatte (6) im geschlossenen Zustand befindet, zweite Enden der beiden doppellagigen Einstellplatten (6) miteinander verbunden sind, um die doppellagigen Einstellplatten (6) zu bilden, die Basis (4) und die obere Abdeckung (3) einen geschlossenen Fischeiinkubationsraum definieren, die doppellagige Einstellplatte (6) eine Gazelage (61) und eine faltbare Lage (62) umfasst, die Gazelage (61) mit Maschen bereitgestellt ist, deren Durchmesser kleiner als der von Fischeiern ist, die faltbare Lage (62) eine Vielzahl von bogenförmigen beweglichen Bahnen (63) umfasst, zwei benachbarte bewegliche Bahnen (63) durch ein Verbindungselement verbunden sind und ein Winkel der beweglichen Bahn (63) durch das Verbindungselement eingestellt werden kann;

einen Propeller (42), der mit der Basis (4) verbunden und in der Lage ist, die Basis (4) anzutreiben, um sich zu bewegen;

ein Fischüberwachungs- und -ortungssystem, das eine Kamera (72) und ein GPS-Ortungsgerät (73), die auf der oberen Abdeckung (3) angeordnet sind, und eine Ultraschallsonde (71), die auf einer äußeren Seitenfläche einer Hebesäule (1) auf einer strömungsabgewandten Fläche angeordnet ist, umfasst;

ein intelligentes Steuersystem (10), das im Hohlraum angeordnet und kommunikativ mit einem ersten Antriebsmechanismus, der das Scharnier zur Drehung antreibt, einem zweiten Antriebsmechanismus, der das Verbindungselement zur Drehung antreibt, der Kamera (72), dem GPS-Ortungsgerät (73), der Ultraschallsonde (71) und den Einwegmagnetventilen verbunden ist;

eine wiederaufladbare Batterie (9), die im Hohlraum angeordnet und elektrisch mit dem intelligenten Steuersystem verbunden ist.

2. Habitatbauvorrichtung für Fische mit klebrigen und demersalen Eiern in einem Fluss nach Anspruch 1, **dadurch gekennzeichnet, dass** das Fischüberwachungs- und -ortungssystem ferner eine Fischlocklampe (74) umfasst, die außerhalb der Stütze für die Hebesäule (2) angeordnet ist, wobei die Farbe der Fischlocklampe (74) einstellbar ist und die Fischlocklampe (74) kommunikativ mit dem intelligenten Steuersystem verbunden ist.

3. Habitatbauvorrichtung für Fische mit klebrigen und demersalen Eiern in einem Fluss nach Anspruch 2, **dadurch gekennzeichnet, dass** die Habitatbauvorrichtung, die auf die Reproduktionsanforderungen von Fischen mit klebrigen und demersalen Eiern ausgerichtet ist, ferner ein Habitatfaktorüberwachungssystem umfasst, wobei das Habitatfaktorüberwachungssystem einen Strömungsratensensor (81), einen Wasserstandssensor (82), einen Wassertemperatursensor (83) und einen Beleuchtungsstärkesensor (84) umfasst, die an einer äußeren Seitenfläche der Stütze für die Hebesäule (2) angeordnet sind, wobei das intelligente Steuersystem jeweils kommunikativ mit dem Strömungsratensensor (81), dem Wasserstandssensor (82), dem Wassertemperatursensor (83) und dem Beleuchtungsstärkesensor (84) verbunden ist;
eine elektrische Heizbahn (16) an der Hebesäule (1) angeordnet ist, die auf der strömungsabgewandten Fläche angeordnet ist, und das intelligente Steuersystem elektrisch mit der elektrischen Heizbahn (16) verbunden ist.

4. Habitatbauvorrichtung für Fische mit klebrigen und demersalen Eiern in einem Fluss nach Anspruch 1, **dadurch gekennzeichnet, dass** ein photovoltaisches Solarmodul (33) auf der oberen Abdeckung (3) angeordnet ist und das photovoltaische Solarmodul (33) elektrisch mit der wiederaufladbaren Batterie verbunden ist.

5. Habitatbauvorrichtung für Fische mit klebrigen und demersalen Eiern in einem Fluss nach Anspruch 1, **dadurch gekennzeichnet, dass** die obere Abdeckung (3) eine poröse Struktur aufweist.

6. Habitatbauvorrichtung für Fische mit klebrigen und demersalen Eiern in einem Fluss nach Anspruch 5, **dadurch gekennzeichnet, dass** die Basis (4) und die obere Abdeckung (3) beide eine elliptische Form aufweisen.

7. Habitatbauvorrichtung für Fische mit klebrigen und demersalen Eiern in einem Fluss nach Anspruch 1, **dadurch gekennzeichnet, dass** das zweite Ende der doppellagigen Einstellplatte (6) mit einem Magnetstreifen bereitgestellt ist; wenn sich die doppellagige Einstellplatte (6) im geschlossenen Zustand befindet, wird eine Anziehungskraft zwischen den Magnetstreifen auf den beiden doppellagigen Einstellplatten (6) erzeugt.

8. Habitatbauvorrichtung für Fische mit klebrigen und demersalen Eiern in einem Fluss nach Anspruch 1, **dadurch gekennzeichnet, dass** die Basis (4) mit einer Nut (43) bereitgestellt ist, der Propeller (42) durch einen Teleskoparm mit der Nut (43) verbunden ist und der Propeller (42) in der Lage ist, durch den Teleskoparm aus der Basis (4) herauszufahren.

9. Habitatbauvorrichtung für Fische mit klebrigen und demersalen Eiern in einem Fluss nach Anspruch 1, **dadurch gekennzeichnet, dass** das Fischeibefestigungssubstrat Wasserpflanzen, Kies, Kieselsteine, feinen Sand und Sediment umfasst.

10. Betriebsverfahren einer Habitatbauvorrichtung für Fische mit klebrigen und demersalen Eiern in einem Fluss, angewandt auf die Habitatbauvorrichtung, die auf die Reproduktionsanforderungen von Fischen mit klebrigen und demersalen Eiern nach einem der Ansprüche 1 bis 9 ausgerichtet ist, wobei das Betriebsverfahren die folgenden Schritte umfasst:

S1. Anordnen der Habitatbauvorrichtung in einem ersten Bereich, Einstellen der doppellagigen Einstellplatte (6) in den geschlossenen Zustand und Einstellen einer Höhe der Habitatbauvorrichtung durch die Hebebaugruppe auf 1/3 bis 2/3 einer maximalen Höhe der Hebesäule (1);
S2. Schieben der Habitatbauvorrichtung durch den Propeller (42), um sich vorwärts zu bewegen, Erfassen eines Wassergebiets, in dem sich Fische, die klebrige und demersale Eier produzieren, sammeln, gemäß der Ultraschallsonde (71) und der Kamera (72) in einem Vorwärtsbewegungsprozess, und Schieben der Habitatbauvorrichtung durch den Propeller (42) zu dem Wassergebiet und Fixieren der Habitatbauvorrichtung auf einem Flussbett durch die Verankerungskomponente (5);
S3. Einstellen der doppellagigen Einstellplatte (6) in den offenen Zustand, Einstellen der Höhe der Habitatbauvorrichtung auf die maximale Höhe durch die Hebevorrichtung und Einstellen des Winkels der beweglichen Bahn (63);
S4. nach einer vorgegebenen Zeit Einstellen der doppellagigen Einstellplatte (6) in den geschlossenen Zustand und Einstellen der Höhe der Habitatbauvorrichtung durch die Hebebaugruppe auf 1/3 bis 2/3 der maximalen Höhe;
S5. Ablösen von Fischeiern;
S6. nachdem das Fischüberwachungs- und -ortungssystem festgestellt hat, dass aus den Fischeiern Larven schlüpfen, Lösen der Verankerungskomponente (5), Schieben der Habitatbauvorrichtung durch den Propeller (42), um sich zu bewegen, Erfassen eines Ortes zum Freisetzen der Larven in einem Bewegungsprozess, Bewegen der Habitatbauvorrichtung zum Ort zum Freisetzen der Larven, Einstellen der doppellagigen Einstellplatte (6) in den offenen Zustand und Freisetzen der Larven.

**Revendications**

1. Appareil de construction d'habitat pour des poissons avec des œufs adhésifs et démersaux dans une rivière, dans lequel, ledit appareil comprend :

   un couvercle supérieur (3), qui peut flotter sur une surface d'eau, présente une pluralité de premières micro-buses (32) réparties uniformément sur la surface inférieure du couvercle supérieur (3), et une pompe à air (31) est disposée sur le couvercle supérieur (3) ;

   une base (4), pourvue d'un substrat de fixation d'œufs de poisson sur celle-ci, dans lequel un coussin gonflable (41) et une seconde micro-buse (44) sont disposés sur la base (4), la pompe à air (31) est reliée à la seconde micro-buse (44) à travers un premier tuyau de raccordement, et la pompe à air (31) est reliée au coussin gonflable (41) à travers un deuxième tuyau de raccordement ;

   un composant d'ancrage (5) est relié à la base (4) ;

   un ensemble de levage, disposé sur la base (4) et soutenu au-dessous du couvercle supérieur (3), dans lequel l'ensemble de levage comprend une pluralité de montants de levage (1) répartis à intervalles dans une direction circonférentielle de la base (4), le montant de levage (1) est pourvu d'une cavité, un distributeur de farine de poisson (11), une bouteille de désinfectant (12), un réservoir de stockage pour suspension de poudre de talc (13) et un réservoir d'eau (14) sont installés dans la cavité, les sorties du distributeur de farine de poisson (11), de la bouteille de désinfectant (12) et du réservoir de stockage pour suspension de poudre de talc (13) sont toutes pourvues d'électrovannes unidirectionnelles, les sorties de la bouteille de désinfectant (12) et du réservoir de stockage pour suspension de poudre de talc (13) sont toutes deux reliées au réservoir d'eau (14), une pompe silencieuse (15) est disposée dans le réservoir d'eau (14), la pompe silencieuse (15) est reliée aux premières micro-buses (32) à travers un troisième tuyau de raccordement, l'ensemble de levage comprend en outre une pluralité de supports d'un montant de levage (2) disposés entre le couvercle supérieur (3) et la base (4), chacun du support du montant de levage (2) comprend un corps de montant pouvant être soulevé et abaissé et une tige de support répartie sur le corps de montant pouvant être soulevé et abaissé sous forme de branche, un tissu non tissé (21) contenant une solution nutritive de plante est prévu sur la tige de support, le tissu non tissé (21) est recouvert de plantes aquatiques, et la sortie du distributeur de farine de poisson (11) est reliée au support du montant de levage (2) à travers un quatrième tuyau de raccordement ;

   une plaque de réglage double couche (6), dans lequel deux plaques de réglage double couche sont disposées symétriquement par rapport au montant de levage disposé sur une surface exposée à l'écoulement, une première extrémité de la plaque de réglage double couche (6) est reliée à travers une charnière à un montant de levage (1) disposé sur une surface exposée à l'écoulement et peut être repliée avec le levage et l'abaissement du montant de levage (1), la plaque de réglage double couche (6) présente un état fermé et un état ouvert, lorsque la plaque de réglage double couche (6) est dans l'état fermée, des secondes extrémités des deux plaques de réglage double couche (6) sont jointes pour que les plaques de réglage double couche (6), la base (4) et le couvercle supérieur (3) définissent un espace fermé d'incubation de œufs de poisson, la plaque de réglage double couche (6) comprend une couche de gaze (61) et une couche pliable (62), la couche de gaze (61) est pourvue de mailles d'un diamètre inférieur à celui de œufs de poisson, la couche pliable (62) comprend une pluralité de feuilles mobiles (63) en forme d'arc, deux feuilles mobiles (63) adjacentes sont reliées à travers un élément de liaison, et un angle de la feuille mobile (63) peut être réglé à travers l'élément de liaison ;

   une hélice (42), reliée à la base (4), et capable d'entraîner la base (4) à se déplacer ;

   un système de surveillance et de positionnement de poissons, comprenant une caméra (72) et un localisateur GPS (73) qui sont disposés sur le couvercle supérieur (3) et une sonde ultrasonore (71) disposée sur une surface latérale externe d'un montant de levage (1) sur une surface non exposée à l'écoulement ;

   un système de commande intelligent (10), disposé dans la cavité, et relié de manière communicative à un premier mécanisme d'entraînement qui entraîne la charnière à tourner, un second mécanisme d'entraînement entraînant l'élément de liaison à tourner, à la caméra (72), au localisateur GPS (73), à la sonde ultrasonore (71) et aux électrovannes unidirectionnelles ;

   une batterie rechargeable (9), disposée dans la cavité, et connectée électriquement au système de contrôle intelligent.

2. Appareil de construction d'habitat pour des poissons avec des œufs adhésifs et démersaux dans une rivière selon la revendication 1, **caractérisé en ce que** le système de surveillance et de positionnement de poissons comprend en outre une lampe attractrice pour poissons (74) disposée à l'extérieur du support du montant de levage (2), la couleur de la lampe attractrice pour poissons (74) est réglable, et la lampe attractrice pour poissons (74) est reliée de manière communicative au système de commande intelligent.

3. Appareil de construction d'habitat pour des poissons avec des œufs adhésifs et démersaux dans une rivière selon la revendication 2, **caractérisé en ce que** l'appareil de construction d'habitat orienté vers des exigences de reproduction de poissons avec des œufs adhésifs et démersaux comprend en outre un système de surveillance de facteur d'habitat, le système de surveillance de facteur d'habitat comprend un capteur de débit (81), un capteur de niveau d'eau (82), un capteur de température d'eau (83) et un capteur d'éclairement (84) qui sont disposés sur une surface latérale externe du support du montant de levage (2), le système de commande intelligent est respectivement relié de manière communicative au capteur de débit (81), au capteur de niveau d'eau (82), au capteur de température d'eau (83) et au capteur d'éclairement (84) ; une feuille chauffante électrique (16) est disposée au niveau du montant de levage (1) disposé sur la surface non exposée à l'écoulement, et le système de commande intelligent est connecté électriquement à la feuille chauffante électrique (16).

4. Appareil de construction d'habitat pour des poissons avec des œufs adhésifs et démersaux dans une rivière selon la revendication 1, **caractérisé en ce qu'**un panneau solaire photovoltaïque (33) est disposé sur le couvercle supérieur (3), et le panneau solaire photovoltaïque (33) est connecté électriquement à la batterie rechargeable.

5. Appareil de construction d'habitat pour des poissons avec des œufs adhésifs et démersaux dans une rivière selon la revendication 1, **caractérisé en ce que** le couvercle supérieur (3) présente une structure poreuse.

6. Appareil de construction d'habitat pour des poissons avec des œufs adhésifs et démersaux dans une rivière selon la revendication 5, **caractérisé en ce que** la base (4) et le couvercle supérieur (3) présentent tous deux une forme elliptique.

7. Appareil de construction d'habitat pour des poissons avec des œufs adhésifs et démersaux dans une rivière selon la revendication 1, **caractérisé en ce que** la seconde extrémité de la plaque de réglage double couche (6) est pourvue d'une bande magnétique ; lorsque la plaque de réglage double couche (6) est dans l'état fermé, une force d'attraction est générée entre les bandes magnétiques sur les deux plaques de réglage double couche (6).

8. Appareil de construction d'habitat pour des poissons avec des œufs adhésifs et démersaux dans une rivière selon la revendication 1, **caractérisé en ce que** la base (4) est pourvue d'une rainure (43), l'hélice (42) est reliée à la rainure (43) à travers un bras télescopique, et l'hélice (42) est capable de s'étendre hors de la base (4) à travers le bras télescopique.

9. Appareil de construction d'habitat pour des poissons avec des œufs adhésifs et démersaux dans une rivière selon la revendication 1, **caractérisé en ce que** le substrat de fixation d'œufs de poisson comprend des plantes aquatiques, du gravier, des galets, du sable fin et des sédiments.

10. Procédé de fonctionnement d'un appareil de construction d'habitat pour des poissons avec des œufs adhésifs et démersaux dans une rivière, appliqué à l'appareil de construction d'habitat orienté vers des exigences de reproduction de poissons avec des œufs adhésifs et démersaux selon l'une quelconque des revendications 1 à 9, le procédé de fonctionnement comprenant les étapes suivantes consistant à :

S1. disposer l'appareil de construction d'habitat dans une première région, régler la plaque de réglage double couche (6) à l'état fermé, et régler une hauteur de l'appareil de construction d'habitat par l'ensemble de levage à 1/3 à 2/3 d'une hauteur maximale du montant de levage (1) ;

S2. pousser, par l'hélice (42), l'appareil de construction d'habitat pour avancer, acquérir, selon la sonde ultrasonore (71) et la caméra (72) dans un processus d'avancement, une zone d'eau dans laquelle se rassemblent des poissons produisant des œufs adhésifs et démersaux, et pousser l'appareil de construction d'habitat par l'hélice (42) vers la zone d'eau, et fixer l'appareil de construction d'habitat sur un lit de rivière par le composant d'ancrage (5) ;

S3. régler la plaque de réglage double couche (6) à l'état ouvert, régler la hauteur de l'appareil de construction d'habitat à la hauteur maximale par l'ensemble de levage, et régler l'angle de la feuille mobile (63) ;

S4. après un temps prédéfini, régler la plaque de réglage double couche (6) à l'état fermé, et régler une hauteur de l'appareil de construction d'habitat à 1/3 à 2/3 de la hauteur maximale par l'ensemble de levage ;

S5. décoller des œufs de poisson ;

S6. après l'éclosion détectée des œufs de poisson en larves par le système de surveillance et de positionnement de poissons, desserrer le composant d'ancrage (5), pousser, par l'hélice (42), l'appareil de construction d'habitat pour se déplacer, acquérir un emplacement de libération de larves dans un processus de déplacement, déplacer l'appareil de construction d'habitat vers l'emplacement de libération de larves, régler la plaque de réglage double couche (6) à l'état ouvert, et libérer des larves.

FIG. 1

FIG. 2

FIG. 3

FIG. 4

EP 4 292 429 B1

FIG. 5

FIG. 6

**EP 4 292 429 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 202110767295 A
- WO 202011044351 A
- WO 202110053687 A
- CN 112385585 A